(19) Europäisches Patentamt
European Patent Office
Office européen des brevets

(11) Publication number: 0 032 613
B1

(12) EUROPEAN PATENT SPECIFICATION

(45) Date of publication of patent specification: 11.07.84

(51) Int. Cl.³: C 08 F 2/50

(21) Application number: 80304258.9

(22) Date of filing: 27.11.80

# (54) Halo-alkyl substituted halogenated polynuclear ketone photoinitiators, photopolymerizable compositions containing them and method of producing polymeric compositions therefrom.

(30) Priority: 28.12.79 US 107820

(43) Date of publication of application:
29.07.81 Bulletin 81/30

(45) Publication of the grant of the patent:
11.07.84 Bulletin 84/28

(84) Designated Contracting States:
BE DE FR GB IT NL

(56) References cited:
US - A - 3 686 084
US - A - 3 827 957
US - A - 4 043 887

(73) Proprietor: MOBIL OIL CORPORATION
150 East 42nd Street
New York New York 10017 (US)

(72) Inventor: Zarnegar, Bizhan Mohammed
18 Ross Avenue
Metuchen New Jersey (US)

(74) Representative: West, Alan Harry et al,
Mobil Court 3 Clements Inn
London WC2A 2EB (GB)

EP 0 032 613 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to halo-alkyl substituted halogenated polynuclear ketones which are initiators for the photopolymerization of unsaturated compounds, compositions comprising such initiators and photopolymerizable monomers, and the method of effecting polymerization of such compositions with ultraviolet light.

The compounds of this invention have the formula

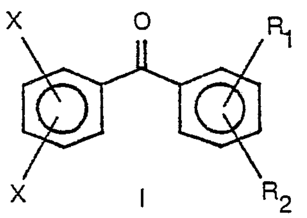

I

or

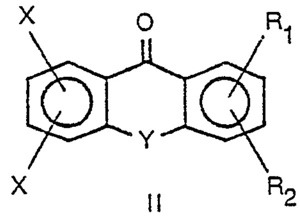

II

in which

$R_1$ is $—CH_2X$, $—CHX_2$ or $CX_3$;

$R_2$ is H or $R_1$;

X is Cl, Br or I; and

Y is S, O or carbonyl.

A wide variety of initiators suitable for the photopolymerization of unsaturated compounds are known. Among these are substituted polynuclear aromatic ketones. Representative members of this class of photoinitiators are disclosed in U.S. patents 3,686,084, 3,827,957 and 4,043,887. U.S. patents 3,686,084 and 4,043,887 describe benzophenones substituted with one or more halo-alkyl groups and their use as photoinitiators. U.S. patent 3,827,957 describes polynuclear ketones containing a heterocyclic ring analogous of those of the compounds II of this invention. The polynuclear ketones of the foregoing patents can be substituted with a halo-alkyl group. The compounds of this invention distinguish over those of the patents in that they require two halo groups on one aromatic ring of the polynuclear ketone and at least one halo-methyl group on the other aromatic nucleus.

It is recognized that photoinitiators must be capable of promoting catalysis of an addition polymerization reaction at a reasonably rapid rate. In certain applications it is also desirable, and sometimes necessary, that the photoinitiator not be highly colored and that it be resistant to conversion to highly colored products. It is particularly advantageous that a photoinitiator be stable to heat discoloration in applications in which the polymer coating is subsequently subjected to a heat treatment.

The polynuclear ketone compounds of this invention are capable of polymerizing a wide variety of unsaturated compounds under the influence of ultraviolet light at a rapid rate and exhibit minimal discoloration upon heating.

In general, the photoinitiators are used in amounts from 0.1 to 10% by weight, preferably from 0.5 to 3% by weight, based on the weight of unsaturated compounds. The radiation which is most effective for initiating polymerization with the compounds of this invention are wave lengths from $2.5 \times 10^{-7}$ to $4.0 \times 10^{-7}$ m. Suitable light sources include sunlight and mercury, tungsten and xenon lamps as well as certain fluorescent lamps.

Unsaturated compounds which can be photopolymerized with the initiators of this invention are, for example, acrylic and methacrylic acid, their esters, vinyl esters, vinyl halides, vinyl ketones, vinyl ethers, vinyl cyanides, vinylidene halides and styrene. Also suitable are mixtures of different monomers and mixtures thereof with unsaturated polyesters. Additionally, the unsaturated compounds can comprise materials such as those containing epoxy-modified unsaturated monomers. Such compositions are described in U.S. patents 4,064,026 and 4,125,503.

The photopolymerization reaction can be carried out in solution, in an emulsion, or preferably in the absence of solvents other than the unsaturated materials themselves. Thus, the compositions of this invention comprising the photoinitiators and unsaturated compounds are advantageously used as coatings on various substrates such as wood, metal, synthetic materials and textiles. It is sometimes desirable, particularly in coating applications, to conduct the initial polymerization or curing with ultraviolet light and then to bake the polymer for a period of time. Generally, a coating is baked at a temperature of 100°C or higher for a period of two minutes or more. Typical conditions for baking are heating at a temperature of 175°C—225°C for 5—15 minutes.

The photoinitiator compounds of this invention can be prepared by known techniques. A convenient method of preparation involves the halogenation of compounds corresponding to those in formulas I and II above, where $R_1$ is methyl. Generally, halogenation results in a mixture of products including the monohalomethyl, the dihalomethyl and the trihalomethyl. Such mixtures are entirely suitable as photoinitiators in this invention even if they contain a small amount of the unhalogenated starting material.

The invention is illustrated by the following nonlimiting examples.

Example 1

Preparation of 2,5-dichloro-4′-chloromethyl benzophenone

To a three-neck round bottom flask equipped with stirrer, condenser, thermometer and addition funnel is added 50 ml of $CH_2Cl_2$ and 27 g $AlCl_3$. The mixture is cooled to ⩽10°C and 2,5-dichlorobenzoyl chloride is added dropwise at ⩽12°C. After addition is complete, 20 g toluene (10% excess) is added dropwise at ⩽12°C. Evolution of HCl off gas commences almost immediately. After addition is complete reaction mixture is stirred and allowed to warm to 25°C. When the reaction is complete, as evidenced by the disappearance of acid chloride, material is worked up in the usual way. Recrystallization of the crude product from 95% ethanol gives 38.8 g (73% yield based on acid chloride) of tannish crystals, m.p. 99—101°C. The 2,5-dichloro-4′-methyl-benzophenone was chlorinated at 97—102°C with chlorine gas to give 2% 2,5-dichloro-4′-methyl, 52% 2,5-dichloro-4′-chloromethyl, 29% 2,5-dichloro-4′-dichloromethyl and 19% 2,5-dichloro-4′-trichloromethylbenzophenone mixture, which is referred to as 2,5-dichloro-4′-x chloromethylbenzophenone.

Example 2

Preparation and photopolymerization of photopolymerizable compositions

Three photopolymerizable compositions were prepared in which each of the photoinitiators 2,5-dichloro-4′-x chloromethylbenzophenone, 4-dichloromethylbenzophenone and 3,4-bis(chloromethyl) benzophenone, were added at the 5% by weight level to a coating composition. The coating composition comprised a mixture of polyepoxide ether polyacrylate (about 20% by weight), hydroxy alkyl acrylate-monoanhydride adduct (about 70% by weight) as disclosed in U.S. patent No. 4,064,026, the triacrylate derivative of trimethyol propane (TMPTA) (5% by weight) and about 0.5% by weight of a slip agent. These compositions were each coated on a white panel at 0.47 mg per $cm^2$, ultra-violet cured in air and then postbaked at 205°C for ten minutes. The samples were analyzed on a Hunter Lab Colorimeter. The results are reported in Table 1 in which "L" is whiteness, "a" is a measure of the amount of red or green and "b" is a measure of the amount of blue or yellow (a high positive value is yellow).

TABLE 1

| | Hunter Lab Colorimeter Values | | |
|---|---|---|---|
| Material | L | a | b |
| 2,5-Dichloro-4′x chloromethyl-benzophenone | 82.79 | −2.27 | +0.36 |
| 3,4-bis(chloromethyl) benzophenone | 82.03 | −2.47 | +2.43 |
| 4-dichloromethylbenzophenone | 82.82 | −2.68 | +2.47 |
| Benzophenone/amine | 81.46 | −2.53 | +3.72 |
| Blank | 84.04 | −1.46 | −2.84 |

**Claims**

1. A compound having the formula

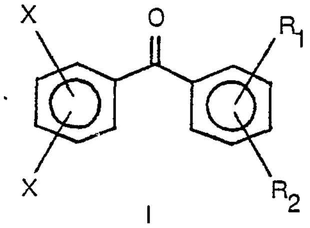

I

or

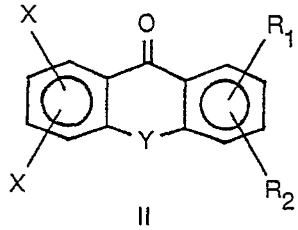

II

in which

$R_1$ is $—CH_2X$, $—CHX_2$ or $CX_3$;
$R_2$ is H or $R_1$;
X is Cl, Br or I; and
Y is S, O, carbonyl.

2. The compound of Claim 1 having the formula I.

3. The compound of Claim 1 having the formula II.

4. A compound of Claim 2 or 3 in which X is Cl.

5. A compound of Claim 4 in which X is Cl and $R_2$ is H.

6. A photopolymerizable composition comprising a photopolymerizable unsaturated compound and as photopolymerization initiator an effective amount of a compound as claimed in any of Claims 1 to 5.

7. A composition of Claim 6 in which the photopolymerization initiator comprises 0.1% to 10% by weight based on the photopolymerizable unsaturated compound.

8. The composition of Claim 7 in which said photopolymerizable unsaturated compound comprises acrylic acid, acrylic acid ester, methacrylic acid, methacrylic acid ester.

9. A method of producing a polymeric composition which comprises exposing the composition of Claims 6, 7 or 8 to ultraviolet light for a period of time sufficient to effect polymerization.

10. The method of Claim 9 in which the polymeric composition is further subjected to baking at a temperature of 100°C or higher for a period of two minutes or more.

**Revendications**

1. Un composé répondant à la formule

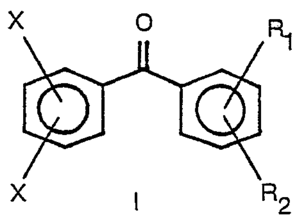

I

ou

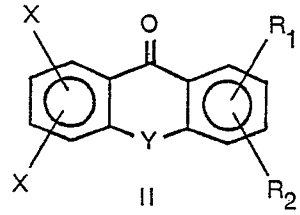

II

dans laquelle

$R_1$ est $—CH_2X$, $—CHX_2$ ou $CX_3$;

$R_2$ est H ou $R_1$;

X est Cl, Br ou I; et

Y est S, O ou carbonyle.

2. Le composé de la revendication 1 et répondant à la formule I.

3. Le composé de la revendication 1 et répondant à la formule II.

4. Un composé de la revendication 2 ou 3 dans lequel X est Cl.

5. Un composé de la revendication 4 dan lequel X est Cl et $R_2$ est H.

6. Une composition photopolymérisable comprenant un composé insaturé photopolymérisable et, comme initiateur de photopolymérisation, une quantité efficace d'un composé tel que revendiqué dans l'une quelconque des revendications 1 à 5.

7. Une composition de la revendication 6 dans laquelle l'initiateur de photopolymérisation constitue de 0,1% à 10% en poids par rapport au composé insaturé photopolymérisable.

8. La composition de la revendication 7 dans laquelle ledit composé insaturé photopolymérisable consiste en acide acrylique, ester acrylique, acide méthacrylique, ester méthacrylique.

9. Un procédé pour produire une composition photopolymère ui consiste à exposer la composition des revendications 6, 7 ou 8 à la lumière ultraviolette pendant une durée suffisante pour effectuer la polymérisation.

10. Le procédé selon la revendication 9, dans lequel la composition polymère est ensuite soumise à la cuisson à une température de 100°C ou plus pendant une durée de 2 minutes ou plus.

**Patentansprüche**

1. Eine Verbindung der Formel

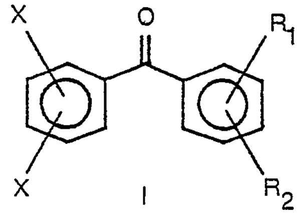

I

oder

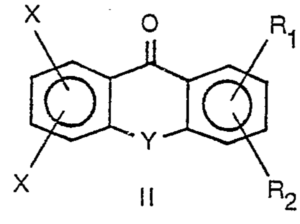

II

in denen:

$R_1$ $—CH_2X$, $—CHX_2$ oder $CX_3$ ist;

$R_2$ H oder $R_1$ ist;

X Cl, Br oder I ist; und

Y S, O oder eine Carbonyl-Gruppe ist.

2. Die Verbindung von Anspruch 1 mit der Formel I.

3. Die Verbindung von Anspruch 1 mit der Formel II.

4. Eine Verbindung nach Anspruch 2 oder 3, bei der X Cl ist.

5. Eine Verbindung nach Anspruch 4, bei der X Cl und $R_2$ H ist.

6. Eine photopolymerisierbare Zusammensetzung mit einer photopolymerisierbaren ungesättigten Verbindung und als Photopolymerisationsinitiator einer wirksamen Menge einer Verbindung nach einem beliebigen der Ansprüche 1 bis 5.

7. Eine Zusammensetzung nach Anspruch 6, bei der der Photopolymerisationsinitiator 0,1 bis 10 Gew.-% bezogen auf die photopolymerisierbare ungesättigte Verbindung bildet.

8. Die Zusammensetzung nach Anspruch 7, bei der die genannte photopolymerisierbare ungesättigte Verbindung Acrylsäure, Acrylsäureester, Methacrylsäure, Methacrylsäureester umfaßt.

9. Ein Verfahren zur Herstellung einer Polymerzusammensetzung, das das Belichten der Zusammensetzung nach den Ansprüchen 6, 7 oder 8 mit Ultraviolettlicht für einen Zeitraum umfaßt, der ausreicht, eine Polymerisation zu bewirken.

10. Das Verfahren nach Anspruch 9, bei dem die Polymerzusammensetzung außerdem einem Härten bei einer Temperatur von 100°C oder mehr für einen Zeitraum von 2 Min. oder mehr unterzogen wird.